(19) Europäisches Patentamt
European Patent Office
Office européen des brevets

(11) Publication number: 0 221 521 B1

(12) # EUROPEAN PATENT SPECIFICATION

(45) Date of publication of the patent specification: 03.10.90

(51) Int. Cl.[5]: **F02D 41/26**, F02P 5/02

(21) Application number: 86115147.0

(22) Date of filing: 31.10.86

(54) **Engine control system.**

(30) Priority: 05.11.85 JP 246356/85

(43) Date of publication of application: 13.05.87 Bulletin 87/20

(45) Publication of the grant of the patent: 03.10.90 Bulletin 90/40

(84) Designated Contracting States: DE GB

(56) References cited:
EP-A- 0 087 809
EP-A- 0 145 993
US-A- 4 214 306
US-A- 4 548 180

PATENT ABSTRACTS OF JAPAN, vol. 9, no. 209 (M-407)[1932], 27th August 1985; & JP-A-60 69 248 (SUZUKI JIDOSHA KOGYO K.K.) 19-04-1985

(73) Proprietor: HITACHI, LTD., 6, Kanda Surugadai 4-chome, Chiyoda-ku, Tokyo 100(JP)

(72) Inventor: Morita, Kiyomi, 1181-100, Higashiishikawa, Katsuta-shi(JP)
Inventor: Miyake, Junji, 1526-2, Kasaharacho, Mito-shi(JP)

(74) Representative: Patentanwälte Beetz sen. - Beetz jun. Timpe - Siegfried - Schmitt-Fumian, Steinsdorfstrasse 10, D-8000 München 22(DE)

EP 0 221 521 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a control system for internal combustion engines which establishes control data by performing map scanning in accordance with the rotational speed of the engine and the load applied, and which is particularly suited for controlling gasoline engines for automotive vehicles.

An electronic type engine control system for internal combustion engines is disclosed in US-A-4 201 161, for example, which is designed to monitor the speed and the load of the engine and scans a map by using the obtained data as parameters, so as to obtain control data on fuel supply and ignition timing that are necessary for controlling the performance of the engine.

The engine control system of the type in which a map is scanned as referred to hereinabove offers the advantage that it responds quickly to changes in engine operating conditions and is capable of coping with transient conditions of the engine, so that a satisfactory control can be achieved. However, one problem encountered by this system is that, when the throttle valve is actuated and brought to a nearly fully opened position, pulsations appear in the engine torque, with the result that undesired surging occurs in the engine speed. US-A-4 548 180 discloses a control method for internal combustion engines wherein the fuel supply amount is determined by scanning a map having the engine speed and the engine load as parameters and taking the actual fundamental fuel amount value from this map. Under certain operational conditions when the rotational speed of the engine is less than a predetermined value, and the intake pressure tends to fluctuate an averaged value of engine load data sampled at a higher rate than that synchronized with the engine crankshaft is used for scanning the map. In this known system, the averaging operation is effected on the basis of the calculation of a weighted mean value. This prior art document does not deal with correction of load data for scanning mapped correction coefficients upon operational conditions in a middle to high-load state, but in an idling state with the correction of an absolute value $P_{BA}$ of the vacuum pressure level in the intake air passage, used for the determination of a fundamental fuel injection duration by scanning the map.

This invention has been developed for the purpose of obviating the aforesaid problem of the prior art. Accordingly, the invention has as its object the provision of an engine control system based on map scanning which is capable of suppressing a pulsation in the torque and responds quickly to changes in engine operational conditions.

The above object is achieved according to claim 1. The dependent claims relate to preferred embodiments.

The above object is solved by a control system for internal combustion engines for controlling the ignition timing and/or the amount for fuel supplied to the engine,
wherein data representing an engine rotational number, an engine load and a rate of change of the throttle valve are respectively detected, and the ignition timing and/or the amount of fuel supplied to the engine are determined by scanning a stored map addressed by the detected data of the engine speed and the engine load, and
further means are provided for suppressing pulsations of the engine load data and providing filtered load data, is, according to the invention, characterized in that

- the map comprises correction coefficients for correcting basic values of the ignition timing and/or the amount of supplied fuel, and
- the filter means provide the filtered load data for scanning the map only when

a) the rate of change per unit of time of the throttle valve opening is equal to or less than a predetermined value and

b) the rotational number of the engine is equal to or less than a predetermined value and

c) the change of the detected engine load is equal to or less than a predetermined value.

In the following, the invention is explained with reference to the drawings.

Fig. 1 is a flow chart of the operation of the engine control system comprising one embodiment of the invention;

Fig. 2 is a view of one example of an engine equipped with an electronic control system which relies on map scanning;

Fig. 3 is a view in explanation of a map used in the prior art;

Figs. 4 and 5 are diagrams showing characteristic curves in explanation of a problem encountered in the prior art;

Fig. 6 is a view in explanation of the map used in the embodiment of the invention; and

Fig. 7 is a view in explanation of the manner in which changes in data on the load applied to the engine are calculated in the present invention.

## DESCRIPTION OF THE PREFERRED EMBODIMENT

Before describing a preferred embodiment of the invention, one example of the engine control system of the electronic control type of the prior art will be outlined by referring to Figs. 2-5. Referring to Fig. 2, an engine control system 1 comprises a microcomputer 2 and a peripheral control circuit 3. Air flow data AF from an air flow sensor which is in the form of a hot wire 20 mounted in a bypass passageway 11 in a suction conduit 10 of the engine, water temperature data WT from a water temperature sensor 21 mounted in an engine cooling water channel 12, air-fuel ratio data λ from an air-fuel ratio sensor 22 mounted in an exhaust pipe 13 of the engine and engine number-of-revolutions data N from a number-of-revolutions sensor, not shown, are fed into the control system 1 which carries out calculation on the data thus supplied, to provide control signals to a fuel injection valve 30, a bypass valve 31, an exhaust gas recirculation (EGR) control valve 32, a fuel pump 33 and an ignition coil, not shown, so that fuel supply, the number of revolutions for idling and EGR can be regulated by controlling the fuel injection valve 30, bypass valve 31 and EGR control valve 32 respectively. Moreover, ignition control is effected by controlling the initiation and interruption of a current supply to the ignition coil. Meanwhile the fuel pump 33 is controlled such that it is operated only when the engine key switch is in a starting position and the engine is rotating by its own power.

A throttle valve 34 is provided with a throttle sensor (or a throttle switch) 35, so that opening data $Q_{TH}$ for the throttle valve 34 or a signal which is turned on when the throttle valve 34 is brought to an idling condition or when the throttle valve 34 is restored to its original position after the acceleration pedal is released is inputted to the microcomputer 2.

In Fig. 2, the fuel injection valve 30 is located downstream of the throttle valve 34 with respect to the direction of flow of air through valve 34 with respect to the direction of flow of air through the suction passageway. It is well known, however, that the fuel injection valve 30 may be mounted upstream of the throttle valve 34.

Although not clearly shown in Fig. 2, many engines for which the control system shown is used are what are generally referred to as multicylinder engines provided with a plurality of cylinders. Thus a manifold 10M is located at the downstream end of the suction conduit 10, and another manifold 13M is located at the upstream end of the exhaust pipe 13.

Operation of the control system of the prior art constructed as described hereinabove is as follows.

The microcomputer 2 processes the air flow data from the air flow sensor 20, calculates an air intake $Q_A$ per unit of time, and a fuel supply quantity $F_i$ per unit time by the following equation based on the air intake $Q_A$ per unit time and data N representing the number of revolutions of the engine:

$$Fi = \frac{QA}{N} + K \qquad (1)$$

where K: one of various coefficients of correction.

Meanwhile the amount of fuel injected by the fuel injection valve 30 per unit of time is fixed, and in this type of system, what is generally referred to as intermittent fuel supply control is effected by setting a fuel injection cycle synchronous with the rotation of the engine, so as to inject fuel for a predetermined time in each injection cycle. Thus the fuel supply quantity $F_i$ of equation (1) is determined by the injection time $T_i$ for each injection cycle of the fuel injection valve 30. Therefore, equation (1) can be rewritten as follows:

$$T_i = K_i \cdot F_i = K_i \frac{Q_A}{N} + K \qquad (2)$$

where $K_i$: a coefficient determined by the fuel injection valve 30.

Thus the control system 1 effects control in such a manner that calculation is done by equation (2) in a predetermined cycle or cyclically every 10 ms, for example, or at a predetermined number of revolutions in synchronism with the rotation of the engine to obtain new injection times $T_i$ successively to actuate the fuel injection valve 30 and open same, to provide a predetermined air-fuel ratio. In the foregoing description, the coefficients of correction are described as being represented by K. In actual practice, however, various corrections are to be made in accordance with the operating conditions of the engine, and the corresponding coefficients of correction should be expressed as

$$K = (K_1, K_2, \ldots K_n).$$

Thus, for practical purposes, a basic fuel injection quantity $T_p$ is set by eliminating the coefficient K of correction from equation (2) which is represented by

$$T_p = K_i \frac{Q_A}{N} \qquad (3).$$

It is therefore usual practice to effect engine control by correcting the basic amount of injected fuel $T_p$ with various types of correction. In this electronic engine control system of the prior art, it has hitherto been customary to use, as the correction coefficient K, a coefficient KMR (KMR = $f_{(Tp, N)}$) which is obtained by scanning a memory map (a memory from which the stored data is read out by using two parameters) shown in Fig. 3 by using the basic amount of injected fuel $T_p$ and the number of revolutions N of the engine. At this time, the basic amount $T_p$ of the injected fuel represents the magnitude of a load applied to the engine, so that it will henceforth be referred to as engine load quantity $T_p$.

The same also applies to the ignition timing control referred to hereinabove. That is, the ignition timing is corrected by examining a map by using the engine load quantity $T_p$ and the number of revolutions N. This map is similar to that shown in Fig. 3 and comprises preliminarily stored optimum correction coefficients for ignition timing corresponding to the engine load $T_p$ and the number of revolutions N. Reading out the table therefore provides the coefficient KMR of correction.

This method however encounters a problem that, when the throttle valve is actuated and brought to a position in which it is nearly fully open, a pulsation appears in engine torque, with a result that a surging occurs in engine speed which reduces driving comfort.

The above-mentioned phenomenon of engine surging is accounted by the fact that the map scanning system using the engine load $T_p$ has as a parameter the intake air quantity $Q_A$ ($Q_A$ may be represented by the subatmospheric pressure of air taken into the engine) as described hereinabove. The air intake quantity $Q_A$ is susceptible to influences exerted by a pulsating stream of air taken into the engine when the throttle valve is nearly fully open. As a result, when the throttle valve is nearly fully open, the data $T_p$ representing the engine load shows a pulsation in spite of the load actually applied to the engine showing almost no change, and the coefficient of correction for the amount of injected fuel and the coefficient of correction for the ignition timing obtained by map scanning are also affected by the pulsation.

In terms of engine control, the pulsation affecting the coefficients of correction manifests itself as a fluctuation in the air/fuel ratio or in the ignition timing corresponding to the pulsation in suction, when the engine is operating under a constant load. This causes changes occurring in the torque developed by the engine, so that a surging occurs in the engine speed and spoils driving comfort as described hereinabove.

In view of the fact that, as shown in Figs. 4 and 5, the correction coefficient for the air-fuel ratio $\lambda$ and the coefficient of correction for the ignition timing $\tau$ show a great change at the subatmospheric pressure of the suction when the throttle valve is nearly fully opened, this has great influences on engine performance.

According to the invention, means are provided for producing the engine load signal $T_p$ by suppressing the rate of change of this signal whereby this filtered signal is used for scanning the map only when the engine is in a predetermined range of operating conditions. When the engine is in this predetermined range of operating conditions, the filtered data is used for performing map scanning. A preferred embodiment of the invention will now be described by referring to Figs. 1, 2, 6 and 7.

In the embodiment shown, its hardware is similar to that of the system of the prior art shown in Fig. 2, and the only difference between the invention and the prior art lies in the manner in which map scanning is performed by the control system 1 with no difference existing between them in other points of control.

The description will therefore be concerned hereinafter mainly with the map scanning performed in the control system.

Fig. 1 is a flow chart for performing map scanning in the embodiment of the control system 1 in conformity with the invention. Map scanning is repeated once every 10 ms, for example.

In step 1, the intake air quantity $Q_A$ based on the air flow data AF from the air flow sensor 20 and the data N representing the number of revolutions are input to the control system 1 which carries out calculation based thereon to obtain basic amount of injected fuel.

In step 2, data $\theta_{TH}$ representing the opening degree of the throttle sensor 35 is examined to determine whether or not a change $\Delta\theta_{TH}$ in the opening degree of the throttle valve 34 is more than a predetermined value. In step 3, the number of revolutions N is examined to determine whether or not it is more than a predetermined value. In step 4, it is determined whether or not a change $\Delta_{Tp}$ in the engine load $T_p$ is more than a predetermined value.

The operation shifts to step 6 only when the results obtained in steps 2-4 are all "NO". However, when any one of the results obtained in steps 2-4 is affirmative "YES", the operation shifts to step 5 with regard to all the items of data.

In steps 5 and 6, data $T_{PDMP}$ (an abbreviation of the filtered value of $T_p$) for scanning a map is obtained.

In step 5, the data $T_p$ obtained in step 1 is substituted for $T_{PDMP}$. In step 6, $T_{PDMP}$ (new) is calculated according to the equation

$$T_{PDMP}\,(\text{new}) = \alpha \cdot Tp + (1-\alpha) \cdot T_{PDMP}\,(\text{old}),$$

whereby $T_{PDMP}$ (old) is the $T_{PDMP}$ value of the previous operation. A predetermined proportion factor may be $\alpha$; and $(1 - \alpha)$ or $\alpha = 1/64$, for example.

Then, operation shifts to step 7 after step 5 or step 6 is followed. In step 7, a map shown in Fig. 6 is scanned by using the data $T_{PDMP}$ and N, to obtain a coefficient KMR of correction.

The difference in the results obtained in effecting control between the case in which the operation goes from step 5 to step 7 and the case in which the operation goes from step 6 to step 7 is as follows. In the former case, the data $T_{PDMP}$ used for scanning the map is the engine load $T_p$ itself, so that map scanning is performed by using the engine load $T_p$ and the number of revolutions N to obtain a coefficient of correction KMR, as is the case with the control system of the prior art outlined hereinabove. Thus the fuel supply or the ignition timing or both of them are corrected.

In the latter case in which the operation goes from step 6 to step 7, the major portion of the data $T_{PDMP}$ (old) used for scanning the map previously with only a portion of the data $T_p$ newly inputted being substituted into the data $T_{PDMP}$, so that the rate of change of the data $T_p$ (the fluctuation thereof) is greatly suppressed. When map scanning is performed by using the data $T_{PDMP}$ (new) in which the rate of change has been greatly suppressed, the appearance in the data $T_{PDMP}$ (new) of a change that is caused by a pulsation of a stream of air taken into the engine is avoided even if such change appears in the data $T_p$. Thus the coefficient of correction KMR obtained by performing map scanning by using the data $T_{PDMP}$ (new) is almost imprevious to the influence exerted by a pulsation of a stream of air taken into the engine. For example, when the proportion factor ($\alpha = 1/64$) referred to hereinabove is selected, the rate of change of the data $T_p$ can be suppressed to 1/64 by simple arithmetic calculation. Thus the influences exerted on engine performance by a pulsation of a stream of air taken into the engine can be avoided.

When the operation shifts from step 6 to step 7, a delay might occur in effecting engine control, although influences exerted by a pulsation of a stream of air taken into the engine can be avoided because the rate of change of the engine load $T_p$ is suppressed as described hereinabove.

To obviate this disadvantage, steps 2-4 are carried out and step 6 is skipped in this embodiment when engine operating conditions are in a range in which a pulsation of a stream of air taken into the engine poses no serious problem and it is not desirable that the rate of change of the data $T_p$ be suppressed and a delay be caused to occur in effecting control of air flow and ignition timing. In this case, the data $T_p$ is substituted as it is for the data $T_{PDMP}$ in step 5.

Operating conditions of the engine in which step 6 is not carried out based on the determinations made in steps 2-4 will be described.

Step 2 determines whether or not a change $\Delta\theta TH$ in the throttle valve opening is more than a predetermined value. Thus, when the throttle valve is suddenly operated or when the engine is accelerated or decelerated suddenly, step 6 is not carried out. As a result, it is possible to avoid a reduction in the responsiveness of the engine and enables acceleration and deceleration to be satisfactorily achieved.

In step 3, a decision is made to skip step 6 when the number of revolutions N of the engine exceeds a predetermined value. Generally, a pulsation of a stream of air taken into the engine greatly affects engine performance when the number of revolutions is low. In contradiction this pulsation causes no serious problem when the number of revolutions is high. Meanwhile the operation performed in step 6 leads to a reduction in the responsiveness of the engine to control. Thus, by following step 3, it is possible to avoid an unnecessary reduction in the responsiveness of the engine to control.

In step 4, it is determined whether or not the rate of change of the engine load $T_p$ has exceeded a predetermined value. When it is determined that the predetermined value is exceeded, step 6 is skipped to thereby avoid a delay in effecting control when the engine load actually undergoes a change. One example of the calculation done in step 4 to obtain a change $\Delta T_p$ in the data $T_p$ will now be described by referring to Fig. 7. When timing data $T_{pn}$ are input, the difference between a simple mean value A ($A = 1/2\ T_{pn} + 1/2\ T_{pn-1}$) of the value of data $T_{pn}$ and the value of data $T_{pn-1}$ obtained in the operation immediately before the operation producing the data $T_{pn}$ and a weighted mean value B ($B = 1/2\ T_{pn-2} + 1/4\ T_{pn-3} + 1/8\ T_{pn-4} + ...$) of the values of dta $T_{pn-2}$, $T_{pn-3}$, $T_{pn-4}$... obtained in operations more than two operations before the operation producing the data $T_{pn}$, and the difference A - B is used as a change $\Delta T_p$. Thus $\Delta T_p = A - B$.

In this example, it is possible to prevent the engine control system from misoperating when the data $T_p$ might undergo a change due to the introduction of a noise, for example.

From the foregoing description, it will be appreciated that the invention achieves to suppress a fluctuation in the torque generated by the engine which might otherwise be caused to occur by a pulsation of a stream of air taken into the engine, without reducing the responsiveness of the control system to operating conditions of the engine. Thus the problem of the prior art that a reduction in riding comfort that might otherwise be caused by a surging of engine speed can be solved.

In the embodiment shown and described hereinabove, the engine load $T_p$ has been described as being calculated based on the air intake $Q_A$ and the data N representing the number of revolutions of the engine. However, the invention is not limited to this specific form of the embodiment and the engine load $T_p$ may also be calculated based on the opening of the throttle valve or the subatmospheric pressure of air taken into the engine.

## Claims

1. A control system for internal combustion engines for controlling the ignition timing and/or the amount of fuel supplied to the engine,
wherein data (N, $T_p$, $\Delta\theta_{TH}$) representing an engine rotational number, an engine load and a rate of change of the throttle valve opening are respectively detected, and the ignition timing and/or the amount of fuel supplied to the engine are determined by scanning a stored map addressed by the detected data of the engine speed and the engine load, and
further means are provided for suppressing pulsations of the engine load data and providing filtered load data, characterized in that

– the map comprises correction coefficients (KMR) for correcting basic values of the ignition timing and/or the amount of supplied fuel, and
– the filter means provide the filtered load data $T_{PDMP}$ (of step 6) for scanning the map only when
a) the rate of change ($\Delta\theta_{TH}$) per unit of time of the throttle valve opening is equal to or less than a predetermined value and
b) the rotational number (N) of the engine is equal to or less than a predetermined value and
c) the change ($\Delta T_p$) of the detected engine load is equal to or less than a predetermined value.

2. The control system according to claim 1, characterized in that
– the filter means are designed to cyclically calculate the filtered load data $T_{PDMP}$ (of step 6) according to the equation

$$T_{PDMP}(new) = \alpha \cdot T_p + (1-\alpha) \cdot T_{PDMP}(old),$$

whereby $T_{PDMP}(old)$ is the $T_{PDMP}$ value calculated in the previous operation cycle and $\alpha$ is a predetermined proportion factor, and
– the control system in case the rate of change ($\Delta\theta_{TH}$) per unit of time of the throttle valve opening <u>or</u> the rotational number (N) <u>or</u> the change ($\Delta T_p$) of the detected engine load ($T_p$) are respectively greater than a respective predetermined value uses the detected engine load ($T_p$) as new engine load data in one cycle to scan the map.

3. The control system according to claim 1 or 2, characterized in that the filter means comprise a microcomputer (2) cyclically receiving an air quantity data ($Q_A$) representing the quantity of air sucked into the engine and the data (N) representing the rotational number of the engine.

## Patentansprüche

1. Steuersystem für Innenbrennkraftmaschinen zur Steuerung des Zündzeitpunkts und/oder der der Maschine zuzuführenden Kraftstoffmenge, wobei Daten (N, $T_p$, $\Delta\theta_{TH}$), welche die Maschinendrehzahl, die Maschinenbelastung und die Änderungsgeschwindigkeit der Drosselklappenöffnung darstellen, jeweils erfaßt und der Zündzeitpunkt und/oder die der Maschine zuzuführende Kraftstoffmenge durch Abtasten einer gespeicherten Tabelle adressiert durch die erfaßten Daten der Maschinendrehzahl und der Maschinenlast bestimmt werden und außerdem Mittel vorgesehen sind, die die Welligkeiten der Maschinenlastdaten unterdrücken und gefilterte Lastdaten erzeugen, dadurch gekennzeichnet, daß
– die Tabelle Korrekturkoeffizienten (KMR) zur Korrektur von Grundwerten des Zündzeitpunkts und/oder der zuzuführenden Kraftstoffmenge enthält, und
– die Filtermittel die gefilterten Lastdaten $T_{PDMP}$ (von Schritt 6) zur Abtastung der Tabelle nur erzeugen, wenn
a) die Änderungsgeschwindigkeit ($\Delta\theta_{TH}$) der Drosselklappenöffnung pro Zeiteinheit gleich oder kleiner als ein zugegebener Wert ist und
b) die Drehzahl (N) der Maschine gleich oder kleiner als ein vorgegebener Wert ist und
c) die Änderung ($\Delta T_p$) der erfaßten Maschinenlast gleich oder kleiner als ein vorgegebener Wert ist.

2. Steuersystem nach Anspruch 1, dadurch gekennzeichnet, daß
– die Filtermittel zur zyklischen Berechnung der gefilterten Lastdaten $T_{PDMP}$ (von Schritt 6) entsprechend der Gleichung

$$T_{PDMP}(neu) = \alpha \cdot T_p + (1-\alpha) \cdot T_{PDMP}(alt)$$

ausgelegt sind, wobei $T_{PDMP}$ (alt) der im vorangehenden Betriebszyklus berechnete $T_{PDMP}$ Wert und $\alpha$ ein vorgegebener Proportionalfaktor sind, und
– das Steuersystem im Falle die Änderungsgeschwindigkeit ($\Delta\theta_{TH}$) der Drosselklappenöffnung pro Zeiteinheit oder die Drehzahl (N) oder die Änderung ($\Delta T_p$) der erfaßten Maschinenlast ($T_p$) jeweils größer als ein jeweils vorgegebener Wert sind in einem Zyklus zur Abtastung der Tabelle die erfaßte Maschinenlast ($T_p$) als neue Maschinenlastdaten verwendet.

3. Steuersystem nach Anspruch 1 oder 2, dadurch gekennzeichnet, daß die Filtermittel einen Mikrocomputer (2) aufweisen, der zyklisch Luftmengendaten ($Q_A$), die die Menge der in die Maschine gesaugten Luft darstellen und die die Drehzahl der Maschine darstellenden Daten (N) empfängt.

**Revendications**

1. Système de commande pour des moteurs à combustion interne, pour commander la séquence d'allumage et/ou la quantité de carburant envoyée au moteur,
dans lequel des données (N, $T_p$, $\Delta\theta_{TH}$) représentant une vitesse de rotation du moteur, une charge du moteur et un taux de variation de l'ouverture du papillon des gaz sont respectivement détectées, et la séquence d'allumage et/ou la quantité de carburant envoyée au moteur sont déterminées par exploration d'une carte mémorisée, adressée par les données détectées de la vitesse du moteur et de la charge du moteur, et
des moyens sont en outre prévus pour supprimer les pulsations des données de la charge du moteur et délivrer des données de charge filtrées, caractérisé en ce que
– la carte comporte des coefficients de correction (KMR) servant à corriger les valeurs de base de la séquence d'allumage et/ou de la quantité de carburant envoyée; et
– les moyens formant filtre délivrent les données de charge filtrées ($T_{PDMP}$ du pas 6) pour l'exploration de la carte uniquement lorsque
a) le taux de variation ($\Delta\theta_{TH}$) par unité de temps de l'ouverture du papillon des gaz est égal ou inférieur à une valeur prédéterminée, et
b) la vitesse de rotation (N) du moteur est égale ou inférieure à une valeur prédéterminée, et
c) la variation ($\Delta T_p$) de la charge détectée du moteur est égale ou inférieure à une valeur prédéterminée.

2. Système de commande selon la revendication 1, caractérisé en ce que
– les moyens formant filtre sont agencés de manière à calculer cycliquement les données de charge filtrées $T_{PDMP}$ (du pas 6) conformément à la relation

$$T_{PDMP}\text{ (nouvelle)} = \alpha \cdot T_p + (1-\alpha) \cdot T_{PDMP}\text{ (ancienne)},$$

$T_{PDMP}$ (ancienne) étant la valeur $T_{PDMP}$ calculée lors du cycle de fonctionnement précédent, et $\alpha$ étant un facteur de proportionnalité prédéterminé, et
– dans le cas où le taux de variation ($\Delta\theta_{TH}$) par unité de temps de l'ouverture du papillon des gaz ou la vitesse de rotation (N) ou la variation ($\Delta T_p$) de la charge détectée ($T_p$) du moteur sont respectivement supérieurs à une valeur prédéterminée respective, le système de commande utilise la charge détectée ($T_p$) du moteur comme nouvelle donnée de la charge lors d'un cycle pour explorer la carte.

3. Système de commande selon la revendication 1 ou 2, caractérisé en ce que les moyens formant filtre comprennent un micro-ordinateur (2) recevant cycliquement une donnée de quantité d'air ($Q_A$) représentant la quantité d'air aspirée dans le moteur et la donnée (N) représentant la vitesse de rotation du moteur.

FIG. 1

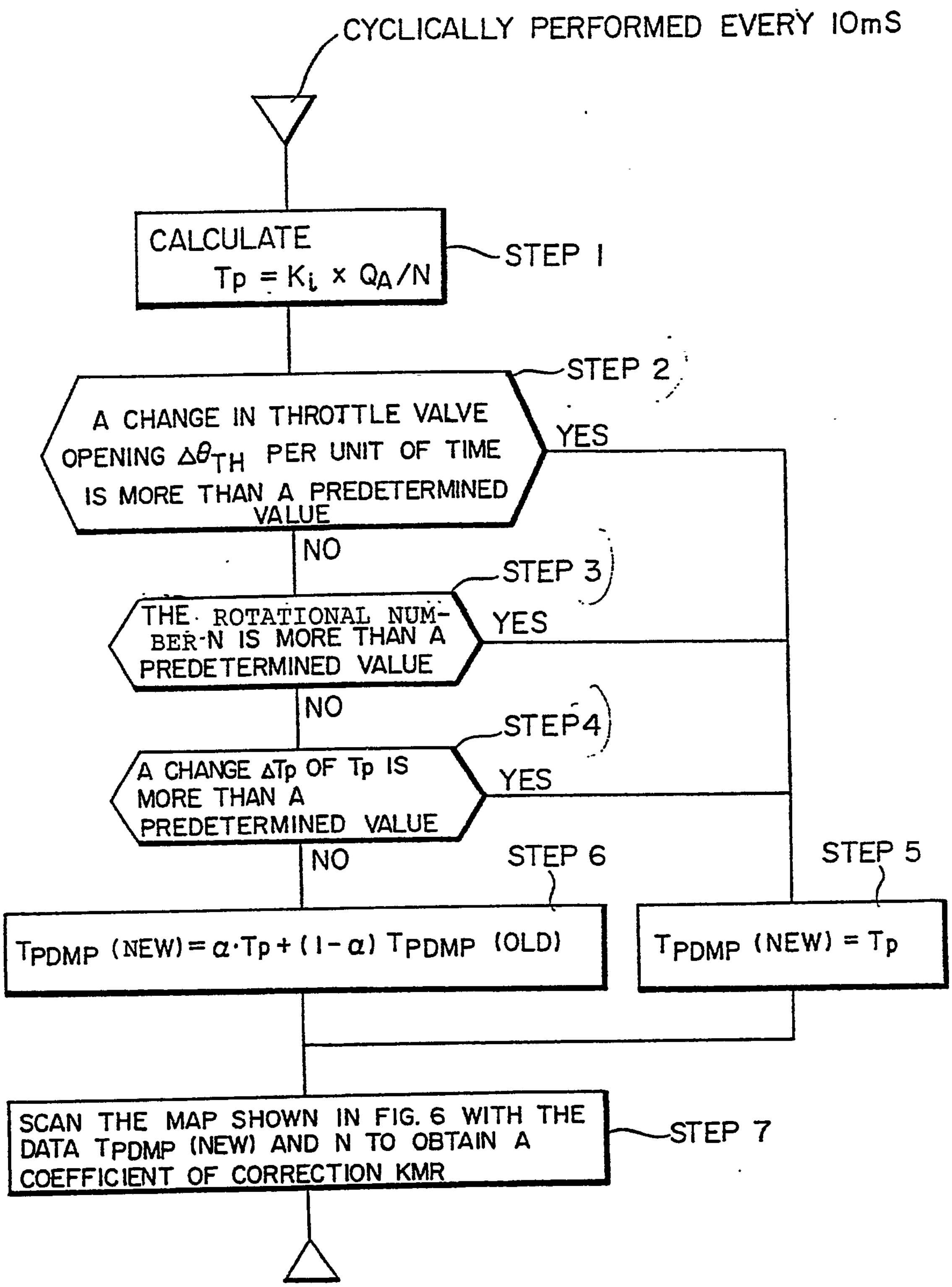
CYCLICALLY PERFORMED EVERY 10mS
CALCULATE Tp = Ki x QA/N
STEP 1
STEP 2
A CHANGE IN THROTTLE VALVE OPENING ΔθTH PER UNIT OF TIME IS MORE THAN A PREDETERMINED VALUE
YES
NO
STEP 3
THE ROTATIONAL NUMBER N IS MORE THAN A PREDETERMINED VALUE
YES
NO
STEP 4
A CHANGE ΔTp OF Tp IS MORE THAN A PREDETERMINED VALUE
YES
NO
STEP 6
STEP 5
TPDMP (NEW) = α·Tp + (1 − α) TPDMP (OLD)
TPDMP (NEW) = Tp
SCAN THE MAP SHOWN IN FIG. 6 WITH THE DATA TPDMP (NEW) AND N TO OBTAIN A COEFFICIENT OF CORRECTION KMR
STEP 7

FIG. 2

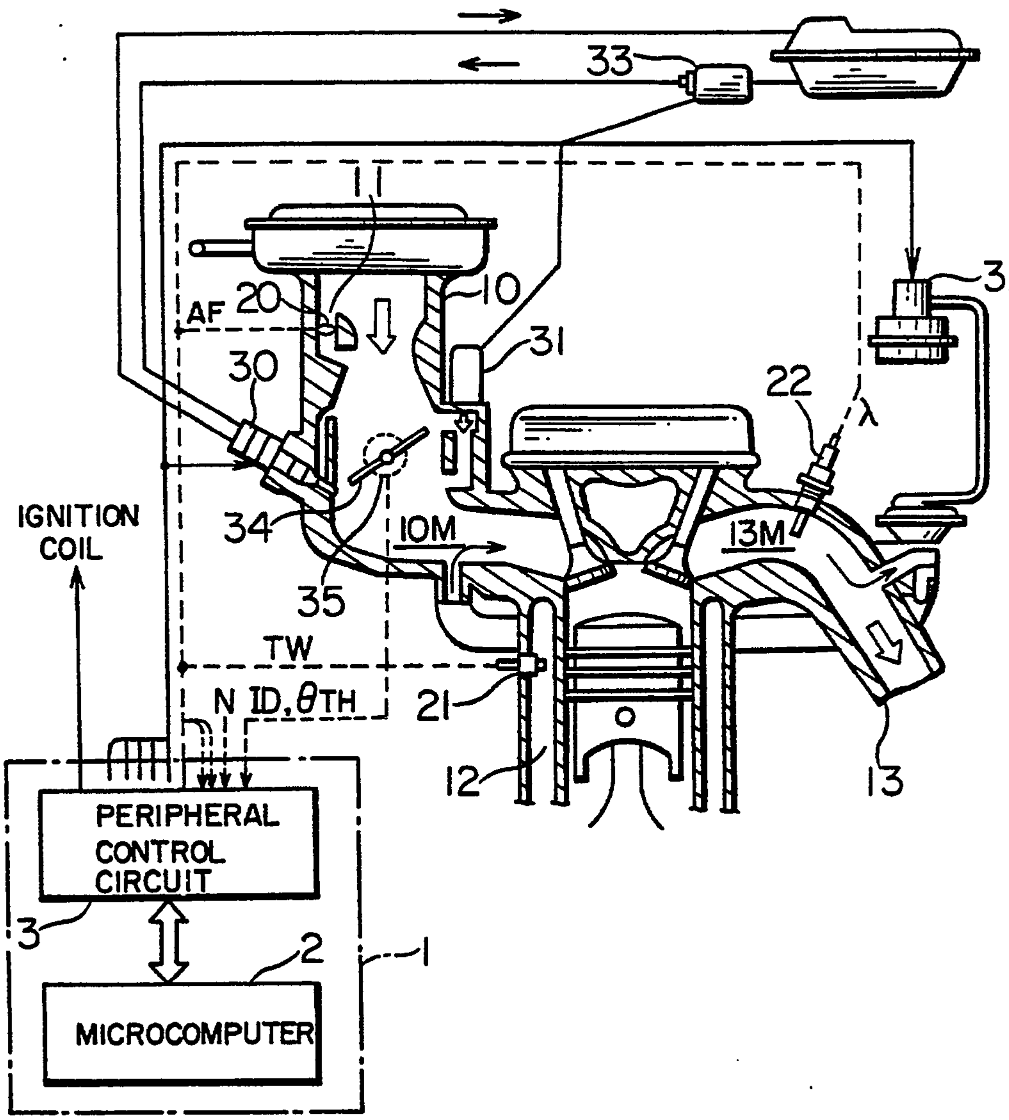
33
32
11
20
10
AF
31
30
22
λ
IGNITION
COIL
34
10M
13M
35
TW
21
N
ID, θTH
12
13
PERIPHERAL
CONTROL
CIRCUIT
3
2
1
MICROCOMPUTER

FIG. 3
PRIOR ART

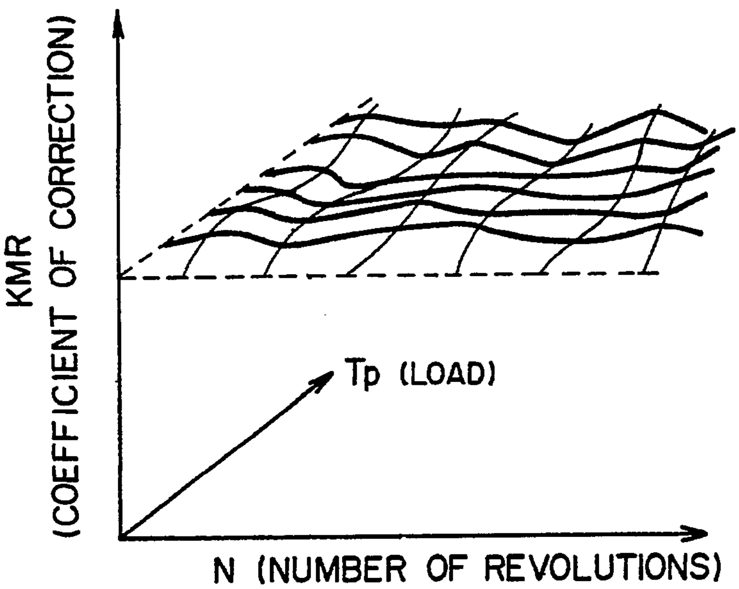


FIG. 4
PRIOR ART

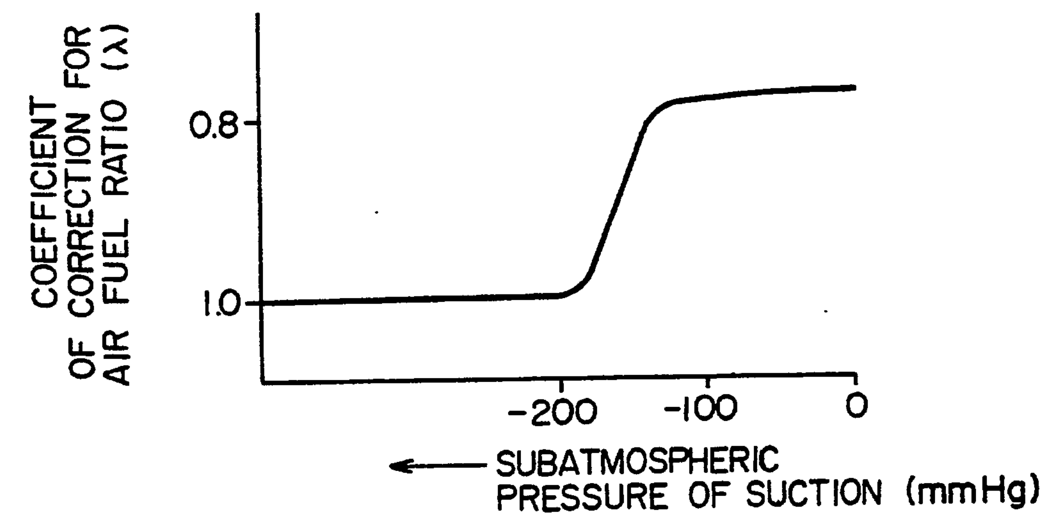

FIG. 5
PRIOR ART

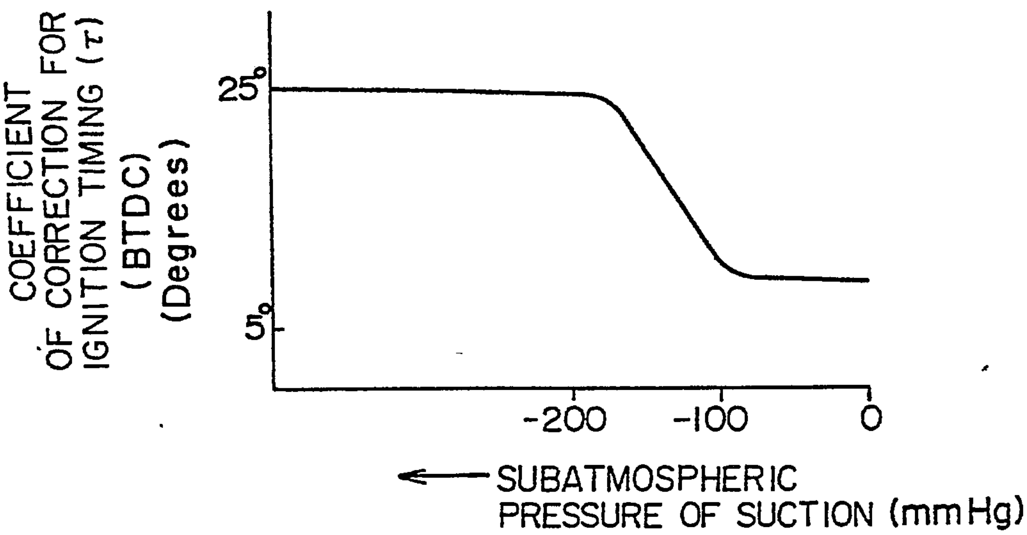


FIG. 6

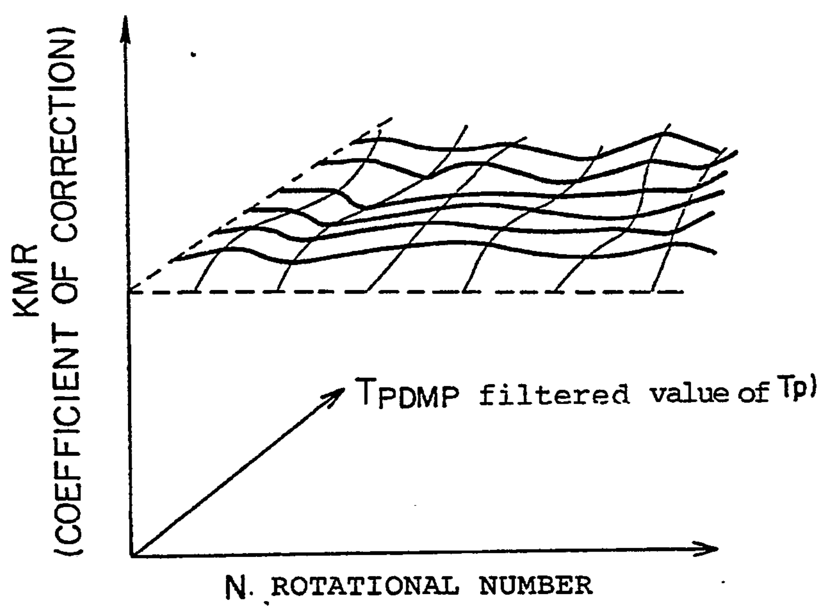

FIG. 7

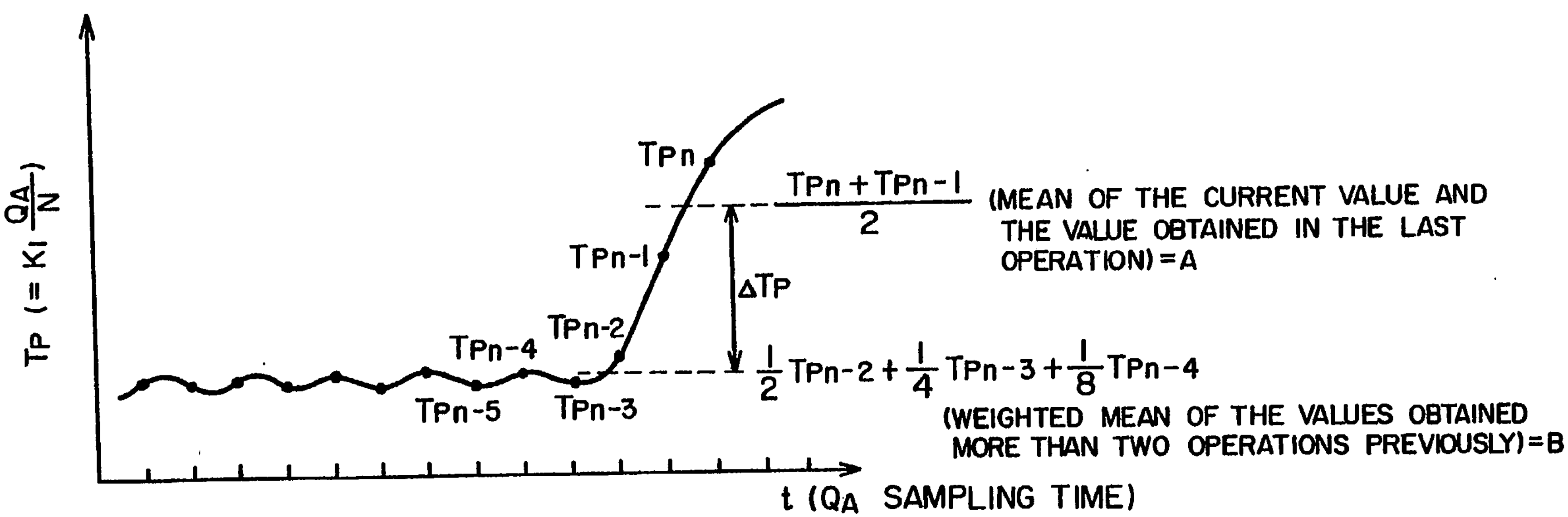
TP (= KI QA/N)
TPn
TPn-1
TPn-2
TPn-3
TPn-4
TPn-5
ΔTP
(TPn + TPn-1)/2 (MEAN OF THE CURRENT VALUE AND THE VALUE OBTAINED IN THE LAST OPERATION) = A
1/2 TPn-2 + 1/4 TPn-3 + 1/8 TPn-4
(WEIGHTED MEAN OF THE VALUES OBTAINED MORE THAN TWO OPERATIONS PREVIOUSLY) = B
t (QA SAMPLING TIME)